# EUROPEAN PATENT SPECIFICATION

(11) **EP 3 527 327 B1**
(45) Date of publication and mention of the grant of the patent: **13.12.2023**
(21) Application number: 18806393.7
(22) Date of filing: 24.05.2018
(51) Int. Cl.: B24D 3/28, C08L 79/02, C08G 73/02, C08K 5/3412, C08K 3/013, C09K 3/14, B24D 18/00, C08G 73/06, C08K 7/18

(54) **RESIN COMPOSITION FOR ABRASIVE TOOL AND ABRASIVE TOOL MANUFACTURED FROM THE RESIN COMPOSITION**
HARZZUSAMMENSETZUNG FÜR EIN SCHLEIFWERKZEUG UND AUS DER HARZZUSAMMENSETZUNG HERGESTELLTES SCHLEIFWERKZEUG
COMPOSITION DE RÉSINE POUR OUTIL ABRASIF ET OUTIL ABRASIF FABRIQUÉ À PARTIR DE LA COMPOSITION DE RÉSINE

(30) Priority: 24.05.2017 KR 20170064326; 23.05.2018 KR 20180058367
(43) Date of publication of application: 21.08.2019
(73) Proprietor: LG Chem, Ltd., Seoul 07336 (KR)
(72) Inventor: KIM, Sang Woo, Daejeon 34122 (KR); LEE, Seunghee, Daejeon 34122 (KR); AHN, Kiho, Daejeon 34122 (KR); KIM, Yulliana, Daejeon 34122 (KR); KIM, Youngdae, Daejeon 34122 (KR)
(74) Representative: Goddar, Heinz J.
(86) International application number: PCT/KR2018/005914
(87) International publication number: WO 2018/217038

(56) References cited:
- WO-A1-2018/216986
- CN-A- 101 733 713
- KR-A- 20160 059 444
- KR-A- 20160 115 543
- US-A- 4 244 857
- US-A1- 2009 130 849

## Description

### [TECHNICAL FIELD]

The present invention relates to use of a resin composition for an abrasive tool, and an abrasive tool made by the use of the resin composition.

### [BACKGROUND OF ART]

An abrasive tool is a tool used to abrade and/or cut articles made of various materials such as metal, plastic, ceramic, etc. by friction. In general, the abrasive tool is formed using a composition including abrasive particles, a filler, and a resin binder.

In the abrasion process of a subject article, due to friction between the abrasive tool and the article, the temperature of the abrasion region rapidly increases. If the abrasion subject is a difficult-to-cut article that is difficult to abrade, for example, a hard metal or a high hardness ceramic, friction heat of a very high temperature is generated.

Such a temperature increase in the abrasion region is the main cause of thermal damage of the abrasive tool and shortening of its lifespan. For example, during the abrasion process, the resin binder may be thermally decomposed by friction, and the abrasive particles and fillers bound to the resin binder may be detached from the abrasive tool.

In order to minimize the thermal damage of an abrasive tool, a polyimide resin, an epoxy resin, a phenol resin, an amino resin, etc. known to have excellent heat resistance have been applied as the resin binder.

However, although the polyimide resin exhibits high heat resistance, the preparation cost is high and the preparation process is very complicated, thus lowering productivity. Further, with the epoxy resin, phenol resin, etc., it is difficult to secure sufficient heat resistance and durability.

CN 101733713 A discloses a composition comprising 30-50 wt% of a phthalocyanine resin prepolymer, 30-60 wt% of an abrasive material and 5-20 wt% of a filler, wherein the phthalocyanine resin prepolymer is a blend of a phthalonitrile and a curing agent. The curing agent can be an amine.

KR 20160115543 A discloses that a polymerizable composition comprising a phthalonitrile resin and an imide curing agent leads to an excellent heat resistance and is easy to process.

### [DETAILED DESCRIPTION OF THE INVENTION]

### [Technical Problem]

It is an object of the present invention to provide use of a resin composition for an abrasive tool that enables the preparation of an abrasive tool having excellent heat resistance and durability by an easy processing process.

It is another object of the present invention to provide an abrasive tool that is made by use of the resin composition and thus has improved heat resistance and durability.

### [Technical Solution]

According to the present invention,
use of a resin composition for preparing an abrasive tool is provided, the resin composition comprising
abrasive particles,
fillers, and
a resin binder cured from a composition containing a phthalonitrile compound,
wherein the resin binder is formed by curing of the composition containing a phthalonitrile compound by a curing agent represented by the following Chemical Formula 1: 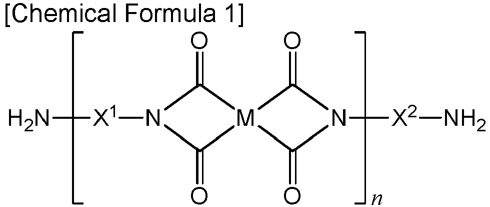
wherein, in Chemical Formula 1,
M is a tetravalent radical derived from an aliphatic, alicyclic, or aromatic compound,
each of X¹ and X² is independently an alkylene group, an alkylidene group, or a divalent radical derived from an aromatic compound, and
n is a number in a range of 2 to 5.

Further, according to the present invention, an abrasive tool made by use of the resin composition is provided.

Further embodiments are disclosed in the dependent claims.

Hereinafter, use of a resin composition for an abrasive tool and an abrasive tool made by use of the resin composition according to the embodiments of the invention will be explained in detail.

Technical terms in the present specification are only for mentioning specific embodiments, and they are not intended to restrict the present invention unless there is a particular mention about them.

Singular expressions used herein may include plural expressions unless they are differently expressed contextually.

The meaning of the term "comprise" used in the specification embodies specific characteristics, areas, essences, steps, actions, elements, and/or components, and does not exclude existence or addition of other specific characteristics, areas, essences, steps, actions, elements, components, and/or groups.

### I. Use of a resin composition for an abrasive tool

According to one embodiment of the invention,
use of a resin composition for preparing an abrasive tool is provided, the resin composition comprising
abrasive particles,
fillers, and
a resin binder cured from a composition containing a phthalonitrile compound,
wherein the resin binder is formed by curing of the composition containing a phthalonitrile compound by a curing agent represented by the following Chemical Formula 1: 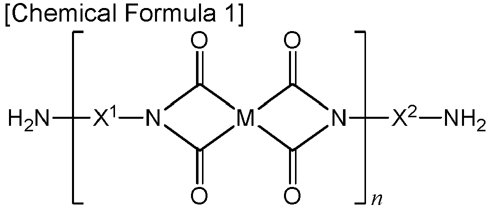
wherein, in Chemical Formula 1,
M is a tetravalent radical derived from an aliphatic, alicyclic, or aromatic compound,
each of X¹ and X² is independently an alkylene group, an alkylidene group, or a divalent radical derived from an aromatic compound, and
n is a number in a range of 2 to 5.

As the result of continuous studies, the present inventors confirmed that if a resin binder cured from a composition containing a phthalonitrile compound is applied for a resin composition for an abrasive tool including abrasive particles and fillers, an abrasive tool having excellent heat resistance and durability can be provided through an easy processing process.

Particularly, since the resin composition for an abrasive tool provided by the present invention includes the above-described resin binder, the thermal decomposition or thermal damage of an abrasive tool by friction heat can be minimized, thus enabling an improvement in durability and lifespan of the abrasive tool.

Hereinafter, the components that can be included in the resin composition for an abrasive tool will be explained in more detail.

The resin composition for an abrasive tool includes abrasive particles.

The abrasive particles are particles that abrade and/or cut the surface of an abrasion subject by friction with the subject.

As the abrasive particles, those that are well known in the technical field to which the present invention pertains may be used without specific limitations. For example, the abrasive particles may be metal particles, inorganic particles, metal coated inorganic particles, etc.

Specifically, the abrasive particles may be one more particles selected from the group consisting of natural diamond, synthetic diamond, boron nitride, cubic boron nitride (CBN), alumina, silica, silicon carbide, alumina-zirconia, titanium diboride, and boron carbide, but are not limited thereto.

The kind and particle diameter of the abrasive particles may be appropriately selected according to the material, shape, etc. of the abrasion subject. For example, the average particle diameter of the abrasive particles may be 0.1 *µ*m or more, 0.5 *µ*m or more, 1 *µ*m or more, 10 *µ*m or more, or 50 *µ*m or more, and 2000 *µ*m or less, 1500 *µ*m or less, 1000 *µ*m or less, or 750 *µ*m or less.

The shape of the abrasive particles is not specifically limited, and they may be applied in various forms such as granules, spheres, rods, polygons, pyramids, etc.

Further, the content of the abrasive particles may vary according to the kind of abrasion subject, and preferably, it may be 20 to 60 wt% based on the total weight of the resin composition for an abrasive tool. Specifically, the abrasive particles may be included in the content of 20 wt% or more, 25 wt% or more, 30 wt% or more, 35 wt% or more, or 40 wt% or more, and 60 wt% or less, 55 wt% or less, or 50 wt% or less, based on the total weight of the resin composition for an abrasive tool.

It is preferable that the content of the abrasive particles is 20 wt% or more so as to sufficiently exhibit the abrasion effect. However, if the abrasive particles are excessively added, durability may be deteriorated such as easy detaching of the abrasive particles from the abrasive tool, and thus it is preferable that the abrasive particles are included in the content of 60 wt% or less.

The resin composition for an abrasive tool also includes fillers.

The fillers are added to reinforce rigidity, compressive strength, flexural modulus, abrasion resistance, thermal conductivity, malleability, abrasion, adhesion, lubrication properties, etc. of the abrasive tool.

As the fillers, those that are well known in the technical field to which the present invention may be used without specific limitations. For examples, the fillers may be metal fillers, inorganic fillers, organic fillers, composite fillers, etc.

Specifically, the fillers may be one or more fillers selected from the group consisting of copper, tungsten, iron oxide, a copper-tin alloy, silicon carbide, alumina, calcite, marl, marble, limestone, cryolite, silica, silicate, metal carbonate, metal sulfate, metal sulfite, metal oxide, sodium chloride, magnesium chloride, iron disulfide, molybdenum disulfide, antimony trisulfide, graphite, glass fiber, molybdenum disulfide, antimony trisulfide, tungsten sulfide, a silane coupling agent, a titanate coupling agent, a zirconate coupling agent, a zircoaluminate coupling agent, and carbon fiber, but are not limited thereto.

The kind and particle diameter of the fillers may be determined considering the properties of an abrasive tool to be reinforced, dispersibility of the fillers, etc.

The shape of the filler is not specifically limited, and it may be applied in various forms such as liquid, granules, spheres, rods, polygons, pyramids, fiber, etc.

The content of the fillers may be determined considering the kind of an abrasion subject, the properties to be reinforced, etc., and preferably, it may be 10 to 60 wt% based on the total weight of the resin composition for an abrasive tool. Specifically, the fillers may be included in the content of 10 wt% or more, 15 wt% or more, or 20 wt% or more, and 60 wt% or less, 50 wt% or less, 40 wt% or less, 30 wt% or less, or 25 wt% or less, based on the total weight of the resin composition for an abrasive tool.

It is preferable that the content of the fillers is 10 wt% or more, so as to sufficiently exhibit the reinforcing effect by the fillers. However, if the fillers are excessively added, abrasion efficiency may be deteriorated or durability may be deteriorated such as easy detaching of the fillers from the abrasive tool, and thus it is preferable that the fillers are included in the content of 60 wt% or less.

Meanwhile, the resin composition for an abrasive tool includes a resin binder cured from a composition containing a phthalonitrile compound.

The resin binder is added so as to afford moldability to the resin composition for an abrasive tool and stably fix the abrasive particles and fillers to an abrasive tool. The resin composition for an abrasive tool is provided in the state wherein the abrasive additives and fillers are dispersed in the matrix of the resin binder.

The resin binder enables the preparation of an abrasive tool by an easy process like the conventional thermosetting or thermoplastic resin binder, without requiring a complicated processing process compared to the existing polyimide resin having high heat resistance.

The resin binder is a compound that is cured from a composition containing a phthalonitrile compound, and it may be a mixture of a phthalonitrile compound and a curing agent, or a prepolymer formed by the reaction of the mixture.

The prepolymer state is a state wherein the reaction of the phthalonitrile compound and curing agent has occurred to some degree in the resin composition for an abrasive tool (for example, the polymerization of an A or B stage has occurred), but a completely polymerized state is not reached, so appropriate flowability is exhibited, and thus it is possible to process into an abrasive tool described below, for example.

Further, the prepolymer state corresponds to a state wherein the polymerization of the phthalonitrile compound and curing agent has been progressed to some degree, and it may mean a state wherein the melting viscosity measured in the range of about 150 °C to 250 °C is 100 Pa·s to 50,000 Pa s, 100 Pa·s to 10,000 Pa s, or 100 Pa·s to 5,000 Pa s. Thus, the prepolymer may also exhibit excellent curability, a low melting temperature, and a wide process window, like the resin composition for an abrasive tool.

For example, the process temperature of the prepolymer may be 150 °C to 350 °C. The process temperature means a temperature at which the prepolymer exists in a processable state. Such a process temperature may be, for example, a melting temperature (Tm) or a glass transition temperature (Tg). In this case, the process window of the prepolymer, i.e., the absolute value of a difference (Tc - Tp) between the process temperature (Tp) and the curing temperature (Tc) of the prepolymer, may be 30 °C or more, 50 °C or more, or 100 °C or more. For example, the curing temperature (Tc) may be higher than the process temperature (Tp).

Such a range may be advantageous for securing appropriate processability during the process of preparing an abrasive tool described below, using the prepolymer. The upper limit of the process window is not specifically limited, but for example, the absolute value of a difference (Tc - Tp) between the process temperature (Tp) and the curing temperature (Tc) may be 400 °C or less or 300 °C or less.

Meanwhile, the kind of the phthalonitrile compound that can be applied for the resin binder is not specifically limited, but for example, as the phthalonitrile compound, a compound including 2 or more, 2 to 20, 2 to 16, 2 to 12, 2 to 8, or 2 to 4 phthalonitrile structures capable of forming the phthalonitrile resin through the reaction with the curing agent may be used.

There are various compounds known to be suitable for the formation of the phthalonitrile resin, and in the present invention, all the known compounds may be used. For example, compounds described in US Patent No. 4,408,035, US Patent No. 5,003,039, US Patent No. 5,003,078, US Patent No. 5,004,801, US Patent No. 5,132,396, US Patent No. 5,139,054, US Patent No. 5,208,318, US Patent No. 5,237,045, US Patent No. 5,292,854, US Patent No. 5,350,828, etc. may be mentioned, and besides those described in the documents, various compounds known in the art may be included.

The curing agent is a compound represented by the following Chemical Formula 1: 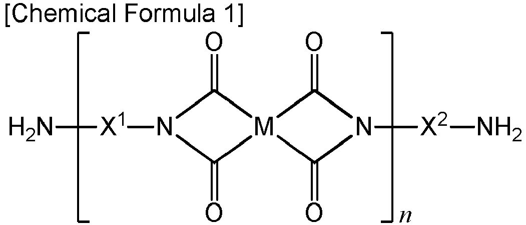
wherein, in Chemical Formula 1,
M is a tetravalent radical derived from an aliphatic, alicyclic, or aromatic compound,
each of X¹ and X² is independently an alkylene group, an alkylidene group, or a divalent radical derived from an aromatic compound, and
n is a number in a range of 2 to 5.

Such an imide-based compound represented by Chemical Formula 1 affords excellent heat resistance to the resin binder because it includes an imide structure in the molecule, and even if the resin composition for an abrasive tool is processed or cured at a high temperature, it does not induce defects such as voids that may have a negative influence on the properties.

In Chemical Formula 1, M may be a tetravalent radical derived from an aliphatic, alicyclic, or aromatic compound, and it may have a structure wherein radicals formed by dehydrogenation of 4 hydrogen atoms in a molecule of the aliphatic, alicyclic, or aromatic compound are respectively connected with the carbon atoms of the carbonyl group of Chemical Formula 1.

As the aliphatic compound, a linear or branched alkane, alkene, or alkyne may be mentioned. As the aliphatic compound, a C2-20, C2-16, C2-12, C2-8, or C2-4 alkane, alkene, or alkyne may be used. The alkane, alkene, or alkyne may be optionally substituted with one or more substituents.

As the alicyclic compound, hydrocarbon compounds including C3-20, C3-16, C3-12, C3-8, or C3-4 nonaromatic ring structures may be mentioned. Such an alicyclic hydrocarbon compound may include at least one heteroatom such as oxygen or nitrogen as a ring member, and if necessary, it may be optionally substituted with one or more substituents.

Further, as the aromatic compound, benzene, benzene-containing compounds, or derivatives thereof may be mentioned. The benzene-containing compound means a compound wherein two or more benzene rings are condensed while sharing one or two or more carbon atoms, or being directly connected or connected by an appropriate linker.

As the linker used to connect two benzene rings, an alkylene group, an alkylidene group, -O-, -S-, -C(=O)-, -S(=O)-, -S(=O)₂-, -C(=O)-O-L¹-O-C(=O)-, -L²-C(=O)-O-L³-, -L⁴-O-C(=O)-L⁵-, -L⁶-Ar¹-L⁷-Ar²-L⁸-, etc. may be mentioned. Each of L¹ to L⁸ may independently be a single bond, -O-, an alkylene group, or an alkylidene group, and each of Ar¹ and Ar² may independently be an arylene group.

The aromatic compound may include, for example, 6 to 30, 6 to 28, 6 to 27, 6 to 25, 6 to 20, or 6 to 12 carbon atoms, and if necessary, may be substituted with one or more substituents. If the aromatic compound includes the above-explained linker, the number of carbon atoms of the aromatic compound is a number including the carbon atom existing in the linker.

Specifically, for example, in Chemical Formula 1, M may be a tetravalent radical derived from an alkane, alkene, or alkyne, or a tetravalent radical derived from the compound represented by any one of the following Chemical Formulas 2 to 7: 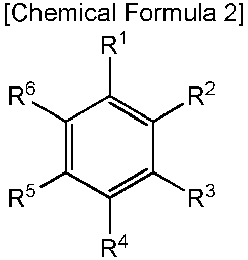
wherein, in Chemical Formula 2, each of R¹ to R⁶ is independently hydrogen, an alkyl group, an alkoxy group, or an aryl group, 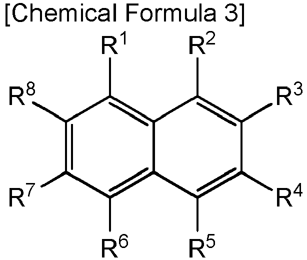
wherein, in Chemical Formula 3, each of R¹ to R⁸ is independently hydrogen, an alkyl group, an alkoxy group, or an aryl group, and 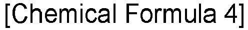 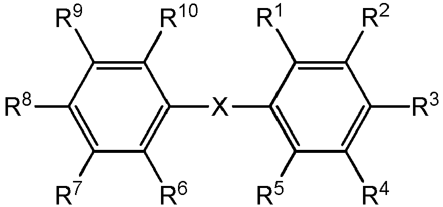
wherein, in Chemical Formula 4,
each of R¹ to R¹⁰ is independently hydrogen, an alkyl group, an alkoxy group, or an aryl group,
X is a single bond, an alkylene group, an alkylidene group, -O-, -S-, -C(=O)-, - S(=O)-, -S(=O)₂-, -C(=O)-O-L¹-O-C(=O)-, -L²-C(=O)-O-L³-, -L⁴-O-C(=O)-L⁵-, or -L⁶-Ar¹-L⁷-Ar²-L⁸-, each of L¹ to L⁸ is independently a single bond, -O-, an alkylene group, or an alkylidene group, and each of Ar¹ and Ar² is independently an arylene group.

Here, the single bond means that an atom does not exist at that part. Thus, in Chemical Formula 4, if X is a single bond, it means that an atom does not exist at a part indicated by X, and in this case, the benzene rings of both sides of X may be directly connected to form a biphenyl structure.

Among the X in Chemical Formula 4, in -C(=O)-O-L¹-O-C(=O)-, -L²-C(=O)-O-L³-, or -L⁴-O-C(=O)-L⁵-, each of L¹ to L⁵ may independently be a C1-12, C1-8, or C1-4 alkylene group or alkylidene group, and the alkylene group or alkylidene group may be substituted or unsubstituted.

Further, among the X in Chemical Formula 4, in - L⁶-Ar¹-L⁷-Ar²-L⁸-, L⁶ and L⁸ may be -O-, L⁷ may be a C1-12, C1-8, or C1-4 alkylene group or alkylidene group, and the alkylene group or alkylidene group may be substituted or unsubstituted. Ar¹ and Ar² may be a phenylene group, and in this case, on the basis of L⁷, each of L⁶ and L⁸ may be connected at the ortho, meta, or para position of the phenylene. 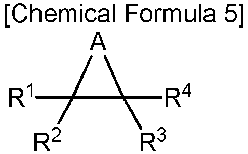
wherein, in Chemical Formula 5,
each of R¹ to R⁴ is independently hydrogen, an alkyl group, or an alkoxy group, and two of R¹ to R⁴ may be connected to each other to form an alkylene group, and
A is an alkylene group or an alkenylene group, and the alkylene group or alkenylene group may include one or more oxygen atoms as a heteroatom, 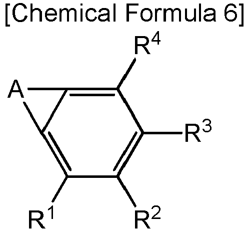
wherein, in Chemical Formula 6, each of R¹ to R⁴ is independently hydrogen, an alkyl group, or an alkoxy group, and A is an alkylene group, and 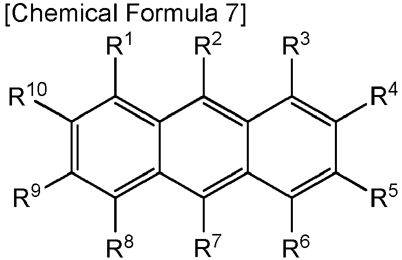
wherein, in Chemical Formula 7, each of R¹ to R¹⁰ is independently hydrogen, an alkyl group, or an alkoxy group.

The tetravalent radical derived from the compound represented by any one of Chemical Formulas 2 to 7 may be formed by direct leaving of the substituents R¹ to R¹⁰ of Chemical Formulas 2 to 7, or may be formed by dehydrogenation of the hydrogen atom of the alkyl group, alkoxy group, aryl group, alkylene group, or alkenylene group that may exist in R¹ to R¹⁰.

For example, if the tetravalent radical is derived from the compound of Chemical Formula 3, one or more, two or more, three or more, or four of R¹ to R⁶ of Chemical Formula 3 may form a radical, or hydrogen atoms of the alkyl group, alkoxy group, or aryl group existing in R¹ to R⁶ may leave to form a radical. The formation of a radical means that the part is connected to the carbon atom of the carbonyl group of Chemical Formula 1, as explained above.

Further, if the tetravalent radical is derived from the compound of Chemical Formula 4, each of R¹ to R¹⁰ is independently hydrogen, an alkyl group, an alkoxy group, or an aryl group, and one or more, two or more, three or more, or four of R¹ to R¹⁰ may form a radical connected to Chemical Formula 1. Each of R¹ to R¹⁰ that does not form a radical may be hydrogen, an alkyl group, or an alkoxy group, or may be hydrogen or an alkyl group. For example, in Chemical Formula 4, two of R⁷ to R⁹ and two of R² to R⁴ may form the radical, and other substituents may independently be hydrogen, an alkyl group, an alkoxy group, or an aryl group, may be hydrogen, an alkyl group, or an alkoxy group, or may be hydrogen or an alkyl group.

More specifically, for example, the compound represented by Chemical Formula 2 may be benzene, 1,2,4,5-tetraalkylbenzene, etc., but is not limited thereto.

In addition, the compound represented by Chemical Formula 4 may be biphenyl, or the compound represented by any one of the following Chemical Formulas A to F, but is not limited thereto.

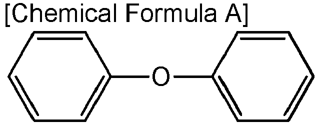

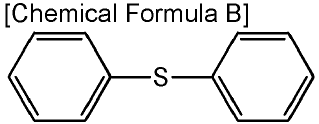

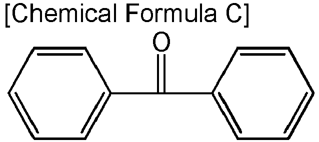

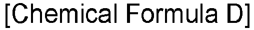

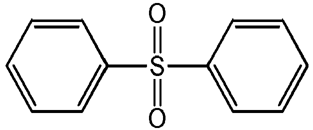

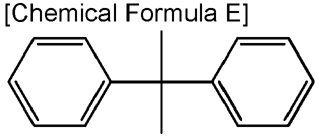

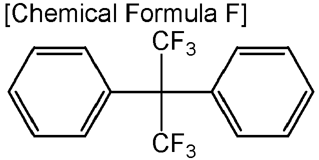

Further, the compound represented by Chemical Formula 5 may be a C4-8 cycloalkane such as cyclohexane, etc., a C4-8 cycloalkene such as cyclohexene that may be substituted with one or more alkyl groups, etc., or a compound represented by any one of the following Chemical Formulas G to I, but is not limited thereto.

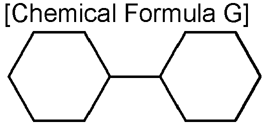

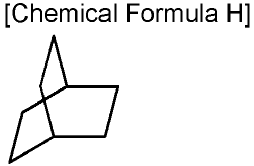

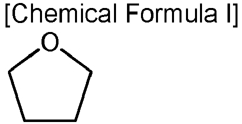

The compound represented by Chemical Formula 6 may be a compound represented by the following Chemical Formula J, or a compound represented by the following Chemical Formula J, at least one hydrogen of which is substituted with an alkyl group, but is not limited thereto.

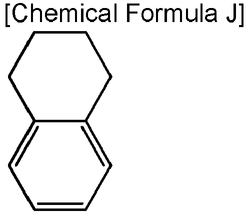

In Chemical Formula 1, each of X¹ and X² may independently be a divalent radical derived from an aromatic compound. For example, each of X¹ and X² may independently be a divalent radical derived from a C6-40 aromatic compound. The divalent radical derived from an aromatic compound may be a divalent radical derived from the above-explained aromatic compounds.

Specifically, for example, each of X¹ and X² may independently be a divalent radical derived from the compound represented by any one of the following Chemical Formulas 8 to 10: 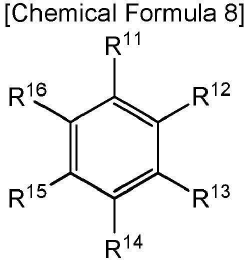
wherein, in Chemical Formula 8, each of R¹¹ to R¹⁶ is independently hydrogen, an alkyl group, an alkoxy group, an aryl group, a hydroxy group, or a carboxyl group, 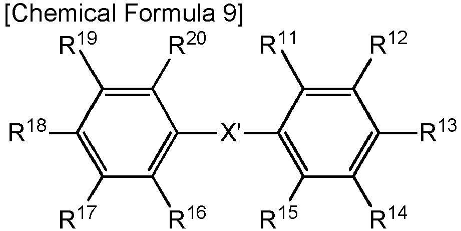
wherein, in Chemical Formula 9,
each of R¹¹ to R²⁰ is independently hydrogen, an alkyl group, an alkoxy group, an aryl group, a hydroxy group, or a carboxyl group,
X' is a single bond, an alkylene group, an alkylidene group, -O-, -S-, -C(=O)-, - NR²¹-, -S(=O)-, -S(=O)₂-, -L⁹-Ar³-L¹⁰-, or -L¹¹-Ar⁴-L¹²-Ar⁵-L¹³-, R²¹ is hydrogen, an alkyl group, an alkoxy group, or an aryl group, each of L⁹ to L¹³ is independently a single bond, -O-, an alkylene group, or an alkylidene group, and each of Ar³ to Ar⁵ is independently an arylene group, and 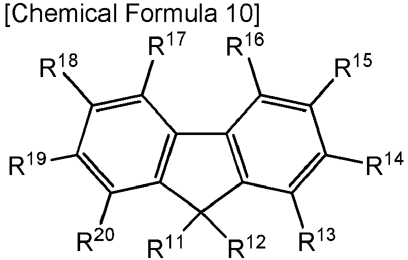
wherein, in Chemical Formula 10, each of R¹¹ to R²⁰ is independently hydrogen, an alkyl group, an alkoxy group, an aryl group, a hydroxy group, or a carboxyl group.

The divalent radical derived from the compound represented by any one of Chemical Formulas 8 to 10 may be formed by directly eliminating the substituents R¹¹ to R²⁰ of Chemical Formulas 8 to 10, or may be formed by dehydrogenation of the hydrogen atom of the alkyl group, alkoxy group, aryl group, alkylene group, or alkenylene group that may exist in R¹¹ to R²⁰.

For example, if the divalent radical is derived from the compound of Chemical Formula 8, for example, phenylene, the substitution position of the amine group on the basis of a part connected to N at X¹ of Chemical Formula 1 may be ortho, meta, or para, and the substitution position of the amine group on the basis of a part connected to N at X² of Chemical Formula 1 may be also ortho, meta, or para.

Further, if the divalent radical is derived from the compound of Chemical Formula 9, one of R⁷ to R⁹ of Chemical Formula 9 and one of R² to R⁴ of Chemical Formula 9 may form a radical connected to the nitrogen atom of Chemical Formula 1. Other substituents excluding the substituents forming radicals may independently be hydrogen, an alkyl group, an alkoxy group or an aryl group, hydrogen, an alkyl group, or an alkoxy group, or hydrogen or an alkyl group.

More specifically, the compound represented by Chemical Formula 8 may be benzene that may be substituted with at least one hydroxyl group or carboxyl group, but is not limited thereto.

The compound represented by Chemical Formula 9 may be a biphenyl that may be substituted with at least one hydroxyl group or carboxyl group, a compound represented by any one of Chemical Formulas A to F, which may be substituted with at least one hydroxyl group or carboxyl group, or a compound represented by the following Chemical Formulas K to M, which may be substituted with at least one hydroxyl group or carboxyl group, but is not limited thereto.

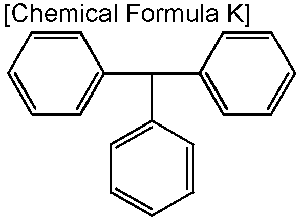

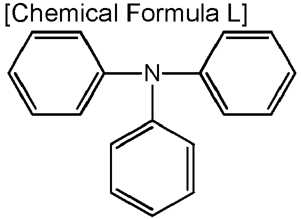

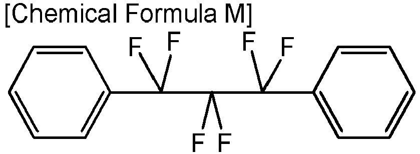

The compound represented by Chemical Formula 9 may be a compound represented by the following Chemical Formula N, or a compound represented by the following Chemical Formula N, at least one hydrogen of which is substituted with a hydroxyl group or a carboxyl group, but is not limited thereto:

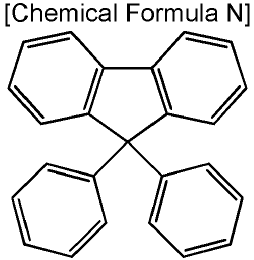

Throughout the specification, the alkyl group may be a C1-20, C1-16, C1-12, C1-8, or C1-4 alkyl group, unless otherwise described. The alkyl group may be linear, branched, or cyclic, and if necessary, may be substituted with one or more substituents.

The alkoxy group may be a C1-20, C1-16, C1-12, C1-8, or C1-4 alkoxy group, unless otherwise described. The alkoxy group may be linear, branched, or cyclic, and if necessary, may be substituted with one or more substituents.

The aryl group means a monovalent residue derived from the above-described aromatic compound, unless otherwise described.

The alkylene group and alkylidene group may be a C1-20, C1-16, C1-12, C1-8, or C1-4 alkylene group or alkylidene group, unless otherwise described. The alkylene group and alkylidene group may be linear, branched, or cyclic, and if necessary, may be optionally substituted with one or more substituents.

Throughout the specification, as the substituent with which the aliphatic compound, alicyclic compound, aromatic compound, alkyl group, alkoxy group, aryl group, alkylene group, alkylidene group, etc. may be optionally substituted, a halogen such as chlorine, fluorine, etc., an epoxy group such as a glycidyl group, an epoxyalkyl group, a glycidoxyalkyl group, alicyclic epoxy group, etc., and an acryloyl group, a methacryloyl group, an isocyanate group, a thiol group, an alkyl group, an alkoxy group, an aryl group, etc. may be mentioned, but is not limited thereto.

Meanwhile, in Chemical Formula 1, n means the number of imide repeat units, and it is a number that is in a range of 2 to 5.

Meanwhile, the compound represented by Chemical Formula 1 may be synthesized by known synthesis methods of organic compounds, and the specific method is not specifically limited. For example, the compound represented by Chemical Formula 1 may be formed by dehydration condensation of a dianhydride compound and a diamine compound, etc.

The compound represented by Chemical Formula 1 is not volatized or decomposed at a high temperature due to a high boiling point, and thus the curability of a resin composition for an abrasive tool is stably maintained, and a void that may have a negative influence on the properties is not formed during a high temperature processing or curing process.

For example, the decomposition temperature of the compound represented by Chemical Formula 1 may be 300 °C or more, 350 °C or more, 400 °C or more, or 500 °C or more. The decomposition temperature means a temperature at which the decomposition rate of the compound represented by Chemical Formula 1 is maintained in the range of 10 % or less, 5 % or less, or 1 % or less. The upper limit of the decomposition temperature is not specifically limited, but for example, it may be about 1000 °C or less.

The compound represented by Chemical Formula 1 can easily control the process window of the resin composition for an abrasive tool itself, that is, a difference between the melting temperature and the curing temperature of the resin composition for an abrasive tool, by the selection of the core M or linker X¹ or X², and thus acts as a curing agent with various properties according to the use.

As explained above, the resin binder is formed by curing of a compound containing the phthalonitrile compound by the curing agent, and the curing agent may be used at a ratio of 0.02 to 1.5 moles, based on 1 mole of the phthalonitrile compound.

It is preferable that the curing agent is used in an amount of 0.02 moles per 1 mole of the phthalonitrile compound, so that the phthalonitrile compound may be sufficiently cured to form a resin binder. However, if the curing agent is excessively used, the process window of a resin composition for an abrasive tool including the resin binder may become narrow, and thus it is preferable that the curing agent is used in an amount of 1.5 moles per 1 mole of the phthalonitrile compound.

Further, the content of the resin binder may vary according to the contents of the abrasive particles and fillers, the kind of abrasion subject, etc., and preferably, it may be 10 to 50 wt%, based on the total weight of the resin composition for an abrasive tool. Specifically, the resin binder may be included in an amount of 10 wt% or more, 15 wt% or more, or 20 wt% or more, and 50 wt% or less, 45 wt% or less, or 40 wt% or less, based on the total weight of the resin composition for an abrasive tool.

It is preferable that the content of the resin binder is 10 wt% or more, so that the abrasive tool may exhibit desired heat resistance, and simultaneously, the abrasive particles and fillers may be sufficiently bound to the abrasive tool. However, if the resin binder is excessively added, abrasion efficiency may be deteriorated, and thus it is preferable that the resin binder is included in the content of 50 wt% or less.

### II. An abrasive tool

According to another embodiment of the invention, an abrasive tool made by the use of the above-explained resin composition is provided.

The abrasive tool is a tool used to abrade and/or cut articles made of various materials such as metal, plastic, ceramic, etc. by friction, and it is formed using the above-explained resin composition.

Particularly, since the abrasive tool is made by use of the above-explained resin composition for an abrasive tool, thermal decomposition or thermal damage of the abrasive tool due to friction heat during the abrasion process can be minimized, and thus improved durability and lifespan can be exhibited.

The abrasive tool may be prepared by a method that is well known in the technical field to which the present invention pertains, using the above-explained resin composition for an abrasive tool.

For example, the abrasive tool may be prepared by a compression molding process of putting the resin composition into a mold, compressing at a constant pressure, and then applying heat. Further, the abrasive tool may be prepared by an injection molding process, a transfer molding process, etc.

### [ADVANTAGEOUS EFFECTS]

The use of the resin composition for preparing an abrasive tool according to the present invention shows high heat resistance and excellent processability, and thus enables the preparation of an abrasive tool capable of exhibiting improved heat resistance and durability.

### [BRIEF DESCRIPTION OF THE DRAWINGS]

FIG. 1 is ¹H-NMR spectrum of the compound (PN1) according to Preparation Example 1 of the present invention.
FIG. 2 is ¹H-NMR spectrum of the compound (PN2) according to Preparation Example 2 of the present invention.
FIG. 3 is ¹H-NMR spectrum of the compound (CA1) according to Preparation Example 3 of the present invention.
FIG. 4 is ¹H-NMR spectrum of the compound (CA2) according to Preparation Example 4 of the present invention.
FIG. 5 is ¹H-NMR spectrum of the compound (CA3) according to Preparation Example 5 of the present invention.

### [DETAILED DESCRIPTION OF THE EMBODIMENTS]

Hereinafter, preferable examples are presented for better understanding of the present invention.

### Preparation Example 1. Synthesis of a phthalonitrile compound (PN1)

The compound of the following Chemical Formula 11 (PN1) was synthesized as follows.

32.7 g of the compound of the following Chemical Formula 12 and 120 g of DMF (dimethyl formamide) were introduced into a 3-neck round-bottom flask, and stirred at room temperature for dissolution. Subsequently, 51.9 g of the compound of the following Chemical Formula 13 was added, and 50 g of DMF was added, and then the mixture was stirred for dissolution. Then, 62.2 g of potassium carbonate and 50 g of DMF were introduced together, and the temperature was raised to 85 °C while stirring. After reacting for about 5 hours, the solution was cooled to room temperature.

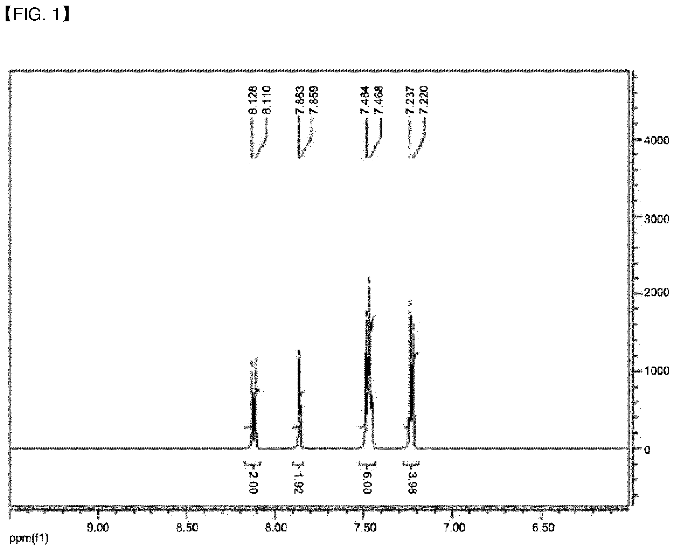

The cooled reaction solution was poured into an aqueous solution of 0.2 N hydrochloric acid to neutralize and precipitate it, and after filtering, the reactant was washed with water. Thereafter, the filtered reactant was dried in a vacuum oven at 100 °C for a day, such that water and remaining solvents were removed, and then the compound of the following Chemical Formula 11 (PN1) was obtained with a yield of about 80 wt%. The ¹H-NMR analysis results for the obtained compound of Chemical Formula 11 (PN1) are shown in FIG. 1.

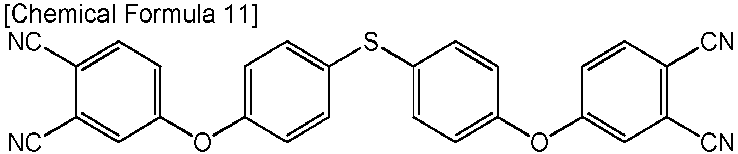

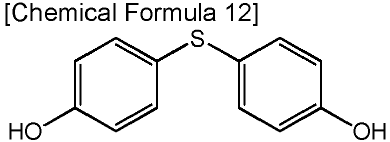

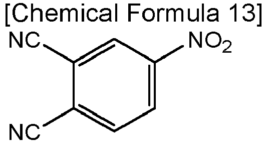

### Preparation Example 2. Synthesis of a phthalonitrile compound (PN2)

The compound of the following Chemical Formula 14 (PN2) was synthesized as follows.

28.0 g of 4,4'-bis(hydroxyphenyl)methane and 150 mL of DMF (dimethyl formamide) were introduced into a 500 mL 3-neck round-bottom flask, and stirred at room temperature for dissolution. Subsequently, 48.5 g of 4-nitrophthalonitrile was added, and 50 g of DMF was added, and then the mixture was stirred for dissolution. Subsequently, 58.1 g of potassium carbonate and 50 g of DMF were introduced together, and the temperature was raised to 85 °C while stirring. After reacting for about 5 hours, the solution was cooled to room temperature.

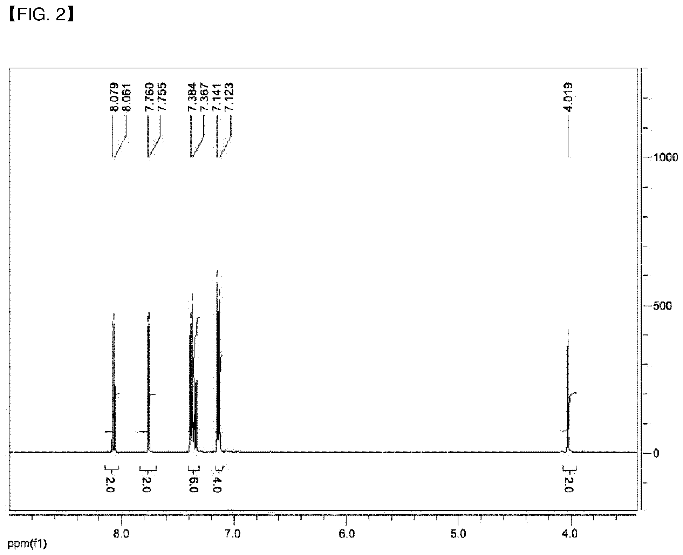

The cooled reaction solution was poured into an aqueous solution of 0.2 N hydrochloric acid to neutralize and precipitate it, and after filtering, it was washed with water. Thereafter, the filtered reactant was dried in a vacuum oven at 100 °C for a day, such that water and remaining solvents were removed, and then the target compound (PN2) was obtained with a yield of about 83 wt%. The ¹H-NMR analysis results for the obtained compound of Chemical Formula 14 (PN2) are shown in FIG. 2.

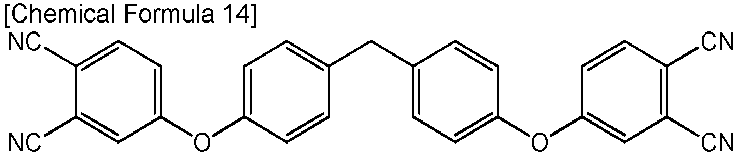

### Preparation Example 3. Synthesis of a curing agent compound (CA1)

A compound of the following Chemical Formula 17 (CA1) was synthesized by dehydrogenation condensation of diamine and dianhydride.

24 g of 4,4'-oxydianiline and 40 g of NMP(N-methyl-pyrrolidone were introduced into a 3-neck round-bottom flask, and stirred at room temperature for dissolution. The solution was cooled with a water bath, and 8.7 g of a compound of the following Chemical Formula 18 was divided into three parts and gradually introduced together with 40 g of NMP. When the introduced compounds were completely dissolved, 16 g of toluene was added to the reactant to form an azeotrope. A Dean-Stark apparatus and a reflux condenser were installed, and the Dean-Stark apparatus was filled with toluene. 4.2 mL of pyridine was introduced as a dehydrogenation condensation catalyst, the temperature was raised to 170 °C, and the solution was stirred for 3 hours. While removing water generated with the formation of an imide ring with the Dean-Stark apparatus, the solution was additionally stirred for 2 hours, and the remaining toluene and pyridine were removed.

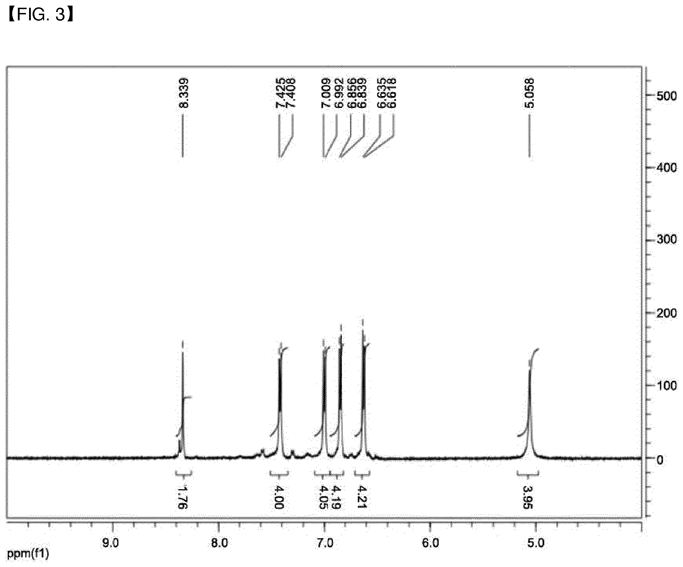

The reaction product was cooled to room temperature, and precipitated in methanol to recover it. The recovered precipitate was extracted with methanol to remove remaining reactants, and dried in a vacuum oven to obtain a compound of Chemical Formula 17 (CA1) with a yield of about 85 wt%. The ¹H-NMR analysis results of the obtained compound of Chemical Formula 17 (CA1) are shown in FIG. 3.

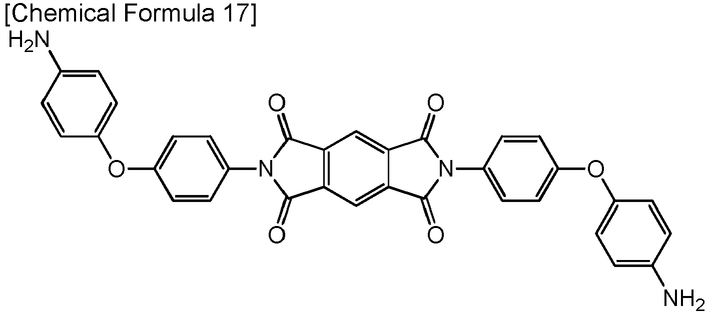

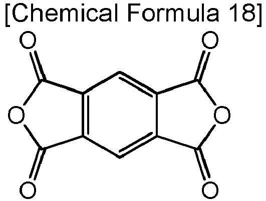

### Preparation Example 4. Synthesis of a curing agent compound (CA2)

A compound of the following Chemical Formula 19 (CA2) was synthesized by dehydrogenation condensation of diamine and dianhydride.

24 g of 4,4'-oxydianiline and 50 g of NMP (N-methyl-pyrrolidone) were introduced into a 3-neck round-bottom flask, and stirred at room temperature for dissolution. The solution was cooled with a water bath, and 19.5 g of a compound of the following Chemical Formula 18 was divided into three parts and gradually introduced together with 100 g of NMP. When the introduced compounds were completely dissolved, 30 g of toluene was added to the reactant to form an azeotrope. A Dean-Stark apparatus and a reflux condenser were installed, and the Dean-Stark apparatus was filled with toluene. 6.3 mL of pyridine was introduced as a dehydrogenation condensation catalyst, the temperature was raised to 170 °C, and the solution was stirred for 3 hours. While removing water generated with the formation of an imide ring with the Dean-Stark apparatus, the solution was additionally stirred for 2 hours, and the remaining toluene and pyridine were removed.

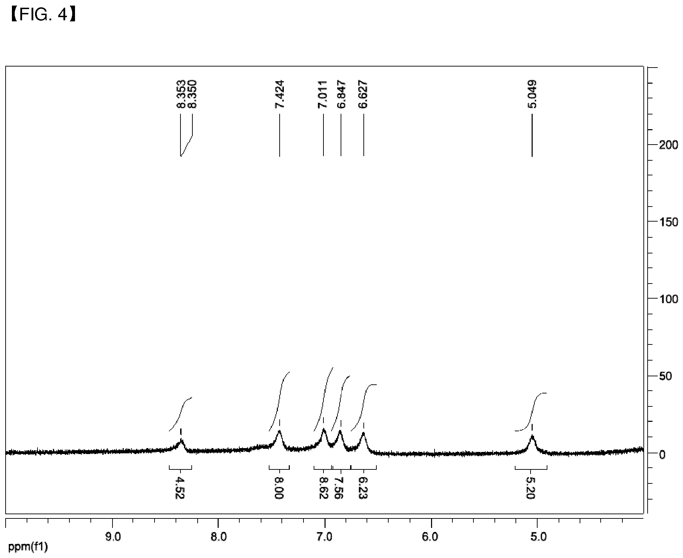

The reaction product was cooled to room temperature, and precipitated in methanol to recover it. The recovered precipitate was extracted with methanol to remove remaining reactants, and dried in a vacuum oven to obtain a compound of Chemical Formula 19 (CA2) with a yield of about 85 wt%. The ¹H-NMR analysis results of the obtained compound of Chemical Formula 19 (CA2) are shown in FIG. 4.

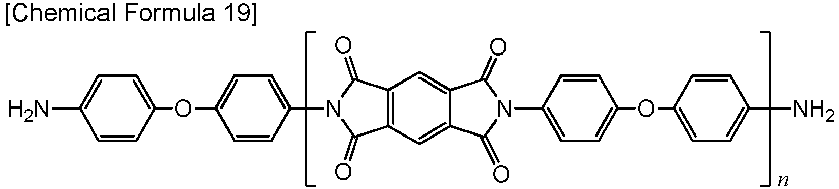

In Chemical Formula 19, n is about 3.

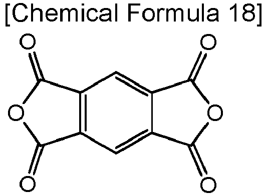

### Preparation Example 5. Synthesis of a curing agent compound (CA3)

A compound of the following Chemical Formula 20 (CA3) was synthesized by dehydrogenation condensation of diamine and dianhydride.

8.1 g of m-phenylene diamine and 50 g of NMP (N-methyl-pyrrolidone were introduced into a 3-neck round-bottom flask, and stirred at room temperature for dissolution. The solution was cooled with a water bath, and 26 g of a compound of the following Chemical Formula 21 was divided into three parts and gradually introduced together with 60 g of NMP. When the introduced compounds were completely dissolved, 23 g of toluene was added to the reactant to form an azeotrope. A Dean-Stark apparatus and a reflux condenser were installed, and the Dean-Stark apparatus was filled with toluene. 5.2 mL of pyridine was introduced as a dehydrogenation condensation catalyst, the temperature was raised to 170 °C, and the solution was stirred for 3 hours. While removing water generated with the formation of an imide ring with the Dean-Stark apparatus, the solution was additionally stirred for 2 hours, and the remaining toluene and pyridine were removed.

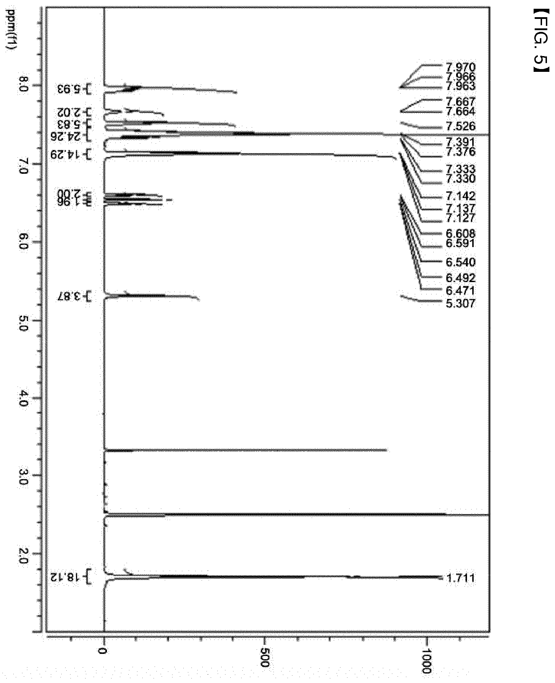

The reaction product was cooled to room temperature, and precipitated in methanol to recover it. The recovered precipitate was Soxhlet extracted with methanol to remove remaining reactants, and dried in a vacuum oven to obtain a compound of Chemical Formula 21 (CA3) with a yield of about 93 wt%. The ¹H-NMR analysis results of the obtained compound of Chemical Formula 21 (CA3) are shown in FIG. 5.

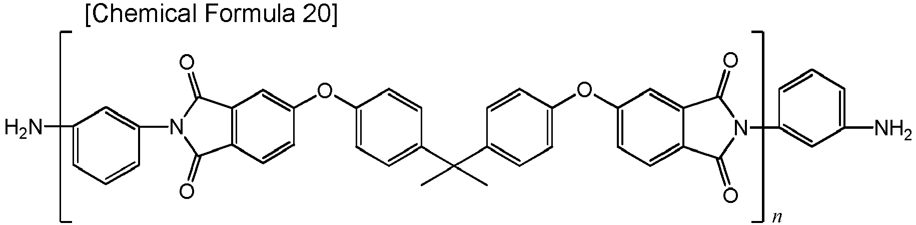

In Chemical Formula 20, n is about 3.

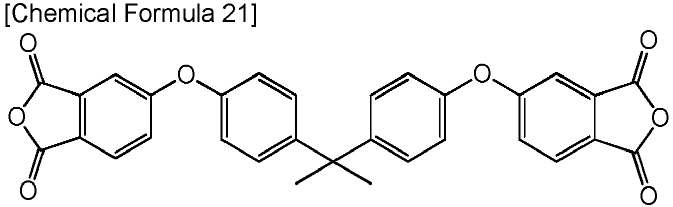

### Example 1

The phthalonitrile compound (PN1) of Preparation Example 1 and the curing agent (CA1) of Preparation Example 4 were mixed at a ratio of 0.2 moles per 1 mole of the phthalonitrile compound (PN1) to prepare a resin binder.

25 wt% of diamond particles having an average particle diameter of 100 µm as abrasive particles, 50 wt% of copper as fillers, and 25 wt% of the resin binder were mixed to prepare a resin composition for an abrasive tool.

The resin composition was introduced into a mold, and cured at 250 °C for 10 minutes, and at 300 °C for 20 minutes under pressure of 30 MPa in a hot press to obtain a molded product.

The molded product was calcined in an oven of 350 °C for 6 hours to prepare a test specimen of an abrasion layer for an abrasive tool.

### Example 2

The phthalonitrile compound (PN1) of Preparation Example 1 and the curing agent (CA2) of Preparation Example 5 were mixed at a ratio of 0.2 moles per 1 mole of the phthalonitrile compound (PN1) to prepare a resin binder.

25 wt% of diamond particles having an average particle diameter of 100 µm as abrasive particles, 50 wt% of copper as fillers, and 25 wt% of the resin binder were mixed to prepare a resin composition for an abrasive tool.

A test specimen of an abrasion layer for an abrasive tool was prepared by the same method as in Example 1, using the resin composition.

### Example 3

The phthalonitrile compound (PN1) of Preparation Example 1 and the curing agent (CA3) of Preparation Example 6 were mixed at a ratio of 0.2 moles per 1 mole of the phthalonitrile compound (PN1) to prepare a resin binder.

25 wt% of diamond particles having an average particle diameter of 100 *µ*m as abrasive particles, 50 wt% of copper as fillers, and 25 wt% of the resin binder were mixed to prepare a resin composition for an abrasive tool.

A test specimen of an abrasion layer for an abrasive tool was prepared by the same method as Example 1, using the resin composition.

### Example 4

The phthalonitrile compound (PN2) of Preparation Example 2 and the curing agent (CA1) of Preparation Example 4 were mixed at a ratio of 0.2 moles per 1 mole of the phthalonitrile compound (PN2) to prepare a resin binder.

25 wt% of diamond particles having an average particle diameter of 100 *µ*m as abrasive particles, 50 wt% of copper as fillers, and 25 wt% of the resin binder were mixed to prepare a resin composition for an abrasive tool.

A test specimen of an abrasion layer for an abrasive tool was prepared by the same method as Example 1, using the resin composition.

### Example 5

The phthalonitrile compound (PN2) of Preparation Example 2 and the curing agent (CA2) of Preparation Example 5 were mixed at a ratio of 0.2 moles per 1 mole of the phthalonitrile compound (PN2) to prepare a resin binder.

25 wt% of diamond particles having an average particle diameter of 100 *µ*m as abrasive particles, 50 wt% of copper as fillers, and 25 wt% of the resin binder were mixed to prepare a resin composition for an abrasive tool.

A test specimen of an abrasion layer for an abrasive tool was prepared by the same method as in Example 1, using the resin composition.

### Example 6

The phthalonitrile compound (PN2) of Preparation Example 2 and the curing agent (CA3) of Preparation Example 6 were mixed at a ratio of 0.2 moles per 1 mole of the phthalonitrile compound (PN2) to prepare a resin binder.

25 wt% of diamond particles having an average particle diameter of 100 *µ*m as abrasive particles, 50 wt% of copper as fillers, and 25 wt% of the resin binder were mixed to prepare a resin composition for an abrasive tool.

A test specimen of an abrasion layer for an abrasive tool was prepared by the same method as in Example 1, using the resin composition.

### Comparative Example 1

25 wt% of diamond particles having an average particle diameter of 100 *µ*m as abrasive particles, 50 wt% of copper as fillers, and 25 wt% of phenol resin were mixed to prepare a resin composition for an abrasive tool.

The resin composition was introduced into a mold, and cured at 150 °C for 30 minutes under pressure of 30 MPa in a hot press to obtain a molded product.

The molded product was calcined in an oven of 210 °C for 6 hours to prepare a test specimen of an abrasion layer for an abrasive tool.

### Comparative Example 2

25 wt% of diamond particles having an average particle diameter of 100 *µ*m as abrasive particles, 50 wt% of copper as fillers, and 25 wt% of polyimide resin were mixed to prepare a resin composition for an abrasive tool.

The resin composition was introduced into a thermoforming mold, and heated and pressure molded for 3 hours with repeated pressurization and pressure reduction under molding pressure of 30 MPa while sequentially raising the temperature to a molding temperature of 250 °C to 350 °C, thus obtaining a molded product. The molded product was heat treated at 350 °C for 3 hours to prepare a test specimen of an abrasion layer for an abrasive tool.

### Experimental Example 1. NMR analysis

For the PN1, PN2, and CA1-CA3 compounds obtained in Preparation Examples 1 to 5, ¹H-NMR analysis was conducted according to the manual of the manufacturing company using 500 MHz NMR equipment of Agilent Inc. The sample for NMR measurement was prepared by dissolving the compound in DMSO (dimethyl sulfoxide)-d6. The ¹H-NMR analysis results of each compound are shown in FIGS. 1 to 5.

### Experimental Example 2. Evaluation of thermal stability

The thermal stability (degree of thermal decomposition) of the test specimen of an abrasion layer for an abrasive tool was evaluated by TGA (thermogravimetric analysis), and the results are shown in the following Table 1.

Specifically, the analysis was conducted using TGA e850 equipment of Mettler-Toledo Company, and it was conducted under an N₂ flow condition while raising the temperature from about 25 °C to 800 °C at a speed of 10 °C/min.

### Experimental Example 3. Evaluation of heat resistance

The heat resistance of the resin binder for an abrasive tool was evaluated through HDT (heat deflection temperature) measurement, and the results are shown in the following Table 1.

Specifically, the heat resistance was measured according to the test method of ASTM D648-16 (Method B) standard.

### Experimental Example 4. Evaluation of processing process

It was evaluated whether or not the processing process is complicated when preparing a test specimen of an abrasion layer for an abrasive tool using each resin composition of the examples and comparative examples.

**[Table 1]**

| | Thermal stability Td10 % | Heat resistance HDT (1.8 MPa) |
|---|---|---|
| Example 1 | 501 | 380 |
| Example 2 | 515 | 420 |
| Example 3 | 407 | 400 |
| Example 4 | 524 | 430 |
| Example 5 | 531 | 430 |
| Example 6 | 520 | 440 |
| Comparative Example 1 | 370 | 155 |
| Comparative Example 2 | 602 | 480 |

According to Experimental Examples 1 to 4, the resin composition of Examples 1 to 6 could be prepared by a method similar to the process of Comparative Example 1 using a phenol resin, and exhibited higher productivity compared to the process of Comparative Example 2 using a polyimide resin. Further, it was confirmed that the test specimens of an abrasion layer for an abrasive tool according to Examples 1 to 6 have relatively higher thermal stability as the result of TGA measurement, and exhibit higher heat resistance as the result of HDG measurement, compared to the test specimen of Comparative Example 1.

## Claims

1. Use of a resin composition for preparing an abrasive tool, the resin composition comprising
abrasive particles,
fillers, and
a resin binder cured from a composition containing a phthalonitrile compound, wherein the resin binder is formed by curing of the composition containing a phthalonitrile compound by a curing agent represented by the following Chemical Formula 1: 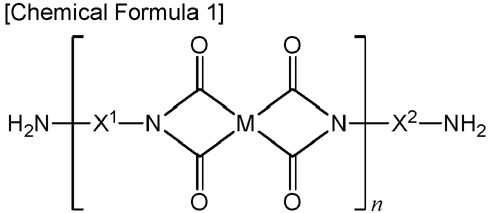
wherein, in Chemical Formula 1,
M is a tetravalent radical derived from an aliphatic, alicyclic, or aromatic compound,
each of X¹ and X² is independently an alkylene group, an alkylidene group, or a divalent radical derived from an aromatic compound, and
n is a number in a range of 2 to 5.

2. Use according to claim 1, wherein the abrasive particles are one more particles selected from the group consisting of natural diamond, synthetic diamond, boron nitride, cubic boron nitride (CBN), alumina, silica, silicon carbide, alumina-zirconia, titanium diboride, and boron carbide.

3. Use according to claim 1, wherein the fillers are one or more fillers selected from the group consisting of copper, tungsten, iron oxide, a copper-tin alloy, silicon carbide, alumina, calcite, marl, marble, limestone, cryolite, silica, silicate, metal carbonate, metal sulfate, metal sulfite, metal oxide, sodium chloride, magnesium chloride, iron disulfide, molybdenum disulfide, antimony trisulfide, graphite, glass fiber, molybdenum disulfide, antimony trisulfide, tungsten sulfide, a silane coupling agent, a titanate coupling agent, a zirconate coupling agent, a zircoaluminate coupling agent, and carbon fiber.

4. Use according to claim 1, wherein the resin composition comprises
20 to 60 wt% of the abrasive particles,
10 to 60 wt% of the fillers, and
10 to 50 wt% of the resin binder.

5. An abrasive tool made by the use according to claim 1.

## Patentansprüche

1. Verwendung einer Harzzusammensetzung zum Herstellen eines Schleifwerkzeugs, wobei die Harzzusammensetzung umfasst:
Schleifteilchen,
Füllstoffe, und
ein Harzbindemittel, das aus einer Zusammensetzung, die eine Phthalonitrilverbindung enthält, gehärtet ist,
wobei das Harzbindemittel gebildet wird durch Härten der Zusammensetzung, die eine Phthalonitrilverbindung enthält, durch ein durch die folgende chemische Formel 1 dargestelltes Härtungsmittel: 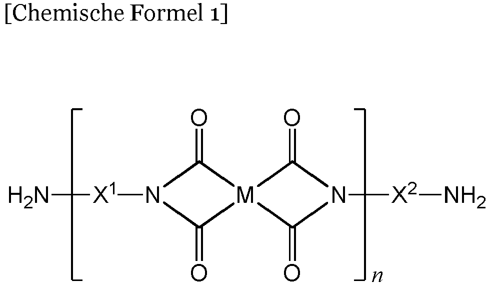
wobei in chemischer Formel 1
M ein vierwertiger Rest ist, abgeleitet von einer aliphatischen, alicyclischen oder aromatischen Verbindung,
jedes X¹ und X² unabhängig eine Alkylengruppe, eine Alkylidengruppe oder ein zweiwertiger Rest, abgeleitet von einer aromatischen Verbindung, ist, und
n eine ganze Zahl in einem Bereich von 2 bis 5 ist.

2. Verwendung nach Anspruch 1, wobei die Schleifteilchen eines oder mehrere Teilchen sind, ausgewählt aus der Gruppe bestehend aus natürlichem Diamant, synthetischem Diamant, Bornitrid, kubischem Bornitrid (CBN), Alumina, Silica, Siliziumcarbid, Alumina-Zirkonia, Titandiborid und Borcarbid.

3. Verwendung nach Anspruch 1, wobei die Füllstoffe ein oder mehrere Füllstoffe sind, ausgewählt aus der Gruppe bestehend aus Kupfer, Wolfram, Eisenoxid, einer Kupfer-Zinn-Legierung, Siliziumcarbid, Alumina, Calcit, Mergel, Marmor, Kalkstein, Kryolit, Silica, Silicat, Metallcarbonat, Metallsulfat, Metallsulfit, Metalloxid, Natriumchlorid, Magnesiumchlorid, Eisendisulfid, Molybdändisulfid, Antimontrisulfid, Graphit, Glasfaser, Molybdändisulfid, Antimontrisulfid, Wolframsulfid, einem Silankopplungsmittel, einem Titanatkopplungsmittel, einem Zirkonatkopplungsmittel, einem Zikroaluminatkopplungsmittel und Kohlefaser.

4. Verwendung nach Anspruch 1, wobei die Harzzusammensetzung umfasst:
20 bis 60 Gew.-% der Schleifteilchen,
10 bis 60 Gew.-% der Füllstoffe, und
10 bis 50 Gew.-% des Harzbindemittel.

5. Schleifwerkzeug, hergestellt, durch die Verwendung nach Anspruch 1.

## Revendications

1. Utilisation d'une composition de résine pour préparer un outil abrasif, la composition de résine comprenant :
des particules abrasives,
des charges, et
un liant de résine durci à partir d'une composition contenant un composé de phtalonitrile,
dans laquelle le liant de résine est formé par le durcissement de la composition contenant un composé de phtalonitrile par un agent de durcissement représenté par la Formule chimique 1 ci-après : 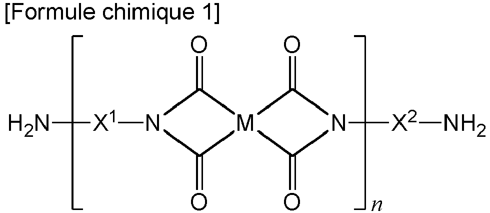
dans laquelle, dans la Formule chimique 1,
M est un radical tétravalent dérivé d'un composé aliphatique, alicyclique ou aromatique,
X¹ et X² sont chacun indépendamment un groupe alkylène, un groupe alkylidène ou un radical divalent dérivé d'un composé aromatique, et
n est un nombre dans une plage de 2 à 5.

2. Utilisation selon la revendication 1, dans laquelle les particules abrasives sont une ou plusieurs particules sélectionnées dans le groupe constitué de diamant naturel, diamant synthétique, nitrure de bore, nitrure de bore cubique (CBN), alumine, silice, carbure de silicium, alumine-zircone, diborure de titane et carbure de bore.

3. Utilisation selon la revendication 1, dans laquelle les charges sont un ou plusieurs éléments sélectionnés dans le groupe constitué de cuivre, tungstène, oxyde de fer, alliage de cuivreétain, carbure de silicium, alumine, calcite, marl, marbre, calcaire, cryolite, silice, silicate, carbonate de métal, sulfate de métal, sulfure de métal, oxyde de métal, chlorure de sodium, chlorure de magnésium, disulfure de fer, disulfure de molybdène, trisulfure d'antimoine, graphite, fibre de verre, disulfure de molybdène, trisulfure d'antimoine, sulfure de tungstène, un agent de couplage de silane, un agent de couplage de titanate, un agent de couplage de zirconate, un agent de couplage zircoaluminate et fibre de carbone.

4. Utilisation selon la revendication 1, dans laquelle la composition de résine comprend :
entre 20 et 60 % en poids des particules abrasives,
entre 10 et 60 % en poids des charges, et
entre 10 et 50 % en poids du liant de résine.

5. Outil abrasif fabriqué par l'utilisation selon la revendication 1.
